# EUROPÄISCHE PATENTSCHRIFT

(11) **EP 1 055 076 B1**
(45) Veröffentlichungstag und Bekanntmachung des Hinweises auf die Patenterteilung: **09.07.2003**
(21) Anmeldenummer: 98965107.0
(22) Anmeldetag: 03.12.1998
(51) Int. Cl.: F16C 11/06

(54) **KUGELSCHALE FÜR EIN KUGELGELENK UND KUGELGELENK MIT EINER SOLCHEN KUGELSCHALE**
BALL SOCKET FOR A BALL JOINT AND BALL JOINT WITH A BALL SOCKET OF THIS TYPE
CUVETTE ROTULE DESTINEE A UN JOINT A ROTULE ET JOINT A ROTULE DOTEE D'UNE TELLE CUVETTE ROTULE

(30) Priorität: 20.12.1997 DE 29722507 U
(43) Veröffentlichungstag der Anmeldung: 29.11.2000
(73) Patentinhaber: Sachsenring Automobiltechnik AG, 08058 Zwickau (DE)
(72) Erfinder: RABE, Jürgen, D-91315 Höchstadt (DE)
(74) Vertreter: Hufnagel, Walter, Dipl.-Ing., Dipl.-Wirtsch.-Ing.
(86) Internationale Anmeldenummer: DE9803595
(87) Internationale Veröffentlichungsnummer: WO99032796

(56) Entgegenhaltungen:
- EP-A- 0 075 414
- EP-A- 0 350 678
- EP-A- 0 659 608
- US-A- 3 787 127
- US-A- 4 619 658
- US-A- 4 904 106
- US-A- 4 971 473

## Beschreibung

Die vorliegende Erfindung bezieht sich auf eine Kugelschale für ein Kugelgelenk gemäß dem Oberbegriff des Anspruchs 1 und ein Kugelgelenk mit einer solchen Kugelschale gemäß dem Oberbegriff des Anspruchs 23.

Aus der US-A- 3 787 127 ist ein Kugelgelenk bekannt, bei dem die Kugel in ein Lagerteil eingeschnappt ist. Das Lagerteil ist ein zylindrisches Spritzteil mit einem eine Öffnung zum Einsetzen der Kugel aufweisenden Kugelhohlraum. Das Lagerteil ist mit am Umfang verteilten Längsschlitzen versehen, welche am Rand der Öffnung beginnen und sich bis zu einem geringen Abstand über den größten Durchmesser des Kugelhohlraums hinaus erstrecken. Hierdurch ist die Wand des der Öffnung zugewandten halbkugelförmigen Kugelhohlraums in auslenkbare Abschnitte unterteilt, so daß die Kugel unter Aufweitung des geschlitzten Teils in den Kugelhohlraum des Lagerteils einsetzbar ist. Das Lagerteil wird mit der eingesetzten Kugel in den Lagerhohlraum des Kugelgelenkgehäuses von dessen offener Bodenseite her eingesetzt und der Boden mit einer Bodenplatte durch Umbördeln eines überstehenden Randes des Kugelgelenkgehäuses (Einrollieren der Bodenplatte) verschlossen. Beim Einrollieren wird das Lagerteil fest in den Kugelhohlraum eingedrückt und dadurch im Kugelgelenkgehäuse fixiert. Der über dem Äquator befindliche, nicht mit Schlitzen versehene, nahezu halbkugelförmige Abschnitt des Kugelhohlraums ist mit Nuten zum Einbringen von Schmierfett versehen. Das bekannte Lagerteil muß insgesamt aus einem Material bestehen, das einerseits genügend elastisch ist, damit die Kugel unter Auslenkung der durch die Schlitze gebildeten Lagerabschnitte eingesetzt werden kann. Andererseits muß es einen geringen Reibungskoeffizienten aufweisen, damit die Lagerreibung möglichst gering ist. Weiterhin muß das Lagerteil relativ genau an die Innenkontur des Hohlraums des Kugelgelenkgehäuses angepaßt sein. Bei vorhandener Übergröße ist das Lagerteil dauerndem Druck ausgesetzt und die Lagerreibung unnötig erhöht und gegebenenfalls die Belastungsgrenze und damit die Lebensdauer deutlich herabgesetzt. Bei Untergröße ist das Lagerteil im Hohlraum des Kugelgelenkgehäuses nicht fixierbar, was zu einem schnellen Verschleiß des Lagerteils führt. Infolge des nowendigen harten Materials für das Lagerteil müssen relativ schmale auslenkbar Abschnitte durch eine entsprechende hohe Anzahl von Schlitzen hergestellt werden, weil die Auslenkbarkeit im Bereich des Äquators wegen der dem Radius des Äquators entsprechenden Wölbung stark eingeschränkt ist. Eine Vergrößerung der Schlitzlänge würde diesen Mangel nicht beseitigen, da hierbei das anschließende Material infolge der zunehmenden Materialstärke keine ausreichende Auslenkung mehr ermöglichen würde.

Mit der vorliegenden Erfindung soll die Aufgabe gelöst werden, trotz der zugelassenen oder sich ergebenden Toleranzen mit geringem Aufwand einen möglichst spielfreien Sitz und eine leichtgängige Lagerung der Kugel in einem Kugelgelenkgehäuse und damit auch eine relativ leichte Auslenkbarkeit des Kugelzapfens zu gewährleisten.

Gelöst wird diese Aufgabe durch die Merkmale der Ansprüche 1 bzw. 23.

Bei Anwendung der Erfindung kann die Kugelschale leicht auf die Kugel aufgeschnappt, im Kugelhohlraum zunächst mechanisch lagefixiert und anschließend durch Einspritzen eines Einfüllmaterials im Kugelhohlraum sicher gelagert werden. Von Vorteil ist weiterhin, daß jeweils für die Kugelschale und das Einfüllmaterial entsprechend geeignete Materialien ausgewählt werden können.

Weitere vorteilhafte Einzelheiten der Erfindung sind in den Unteransprüchen angegeben und werden nachfolgend anhand der in der Zeichnung veranschaulichten Ausführungsbeispiele näher beschrieben. Es zeigen:
- Fig. 1: die Ansicht einer Kugelschale von unten,
- Fig. 2: eine Ansicht der Kugelschale der Fig. 1 von der Seite,
- Fig. 3: eine Seitenansicht der Kugelschale in einem zugeordneten Kugelgelenkgehäuse gemäß dem Schnitt A-A der Fig. 1 und 4,
- Fig. 3A: eine Kugel mit aufgeschnappter Kugelschale in einer Seitenansicht,
- Fig. 4: eine Draufsicht auf die Kugelschale,
- Fig. 5: eine Kugelschale mit schräg verlaufenden Vertiefungen,
- Fig. 6: die Ansicht einer Kugelschale mit vier Schlitzen von unten und
- Fig. 7: die Kugelschale der Fig. 6 von der Seite.

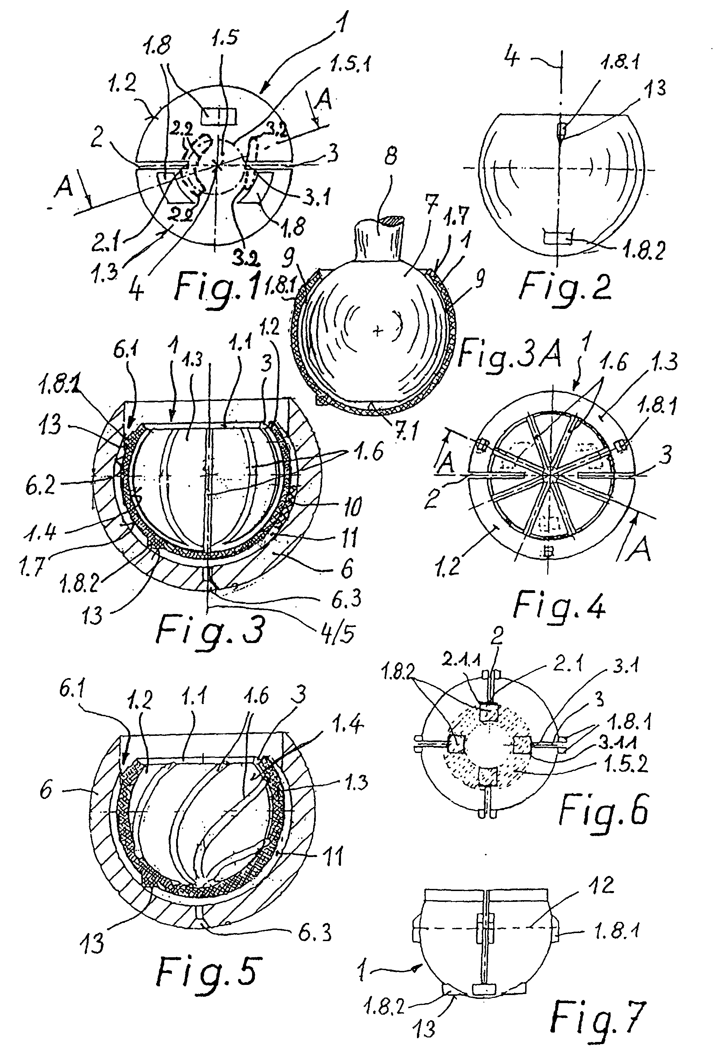

Die in den Fig. 1 bis 5 dargestellte Kugelschale 1 besitzt eine in der Zeichnung dargestellte obere Öffnung 1.1 un und zwei auf einander gegenüber liegenden Seiten vorgesehene Schlitze 2, 3. Diese Schlitze 2, 3 verlaufen im wesentlichen in Richtung der Zentralachse 4 der Kugelschale 1, die bevorzugt auch koaxial oder im wesentlichen koaxial zur Zentralachse 5 des zugeordneten Kugelgelenkgehäuses 6 verläuft. Die Schlitze 2, 3 laufen unten in einem nach außen hin geschlossenen, in der Fig. 1 durch die strichpunktierte Randlinie 1.5.1 angedeuteten Zentralbereich 1.5 der Kugelschale 1 zusammen. Der Zentralbereich 1.5 ist ebenfalls als Vertiefung ausgebildet, so daß er Schmiermittel aufnehmen kann. Durch die Schlitze 2 und 3 besitzt die Kugelschale 1 zwei federnd auslenkbare Schalenteile 1.2 und 1.3. Es können auch mehr als zwei Schlitze oder auch nur ein einziger Schlitz vorgesehen sein. Besonders in letzterem Fall ist es vorteilhaft oder sogar notwendig, am Ende 2.1 bzw. 3.1 des bzw. der Schlitze(s) 2 und/oder 3 nach einer Seite oder nach beiden Seiten einen quer abzweigenden Querschlitz 2.2 bzw. 3.2 vorzusehen, um eine günstige Auslenkbarkeit der erhaltenen Schalenteile 1.2 und 1.3 zu gewährleisten. Insbesondere verläuft oder verlaufen der bzw. die Querschlitze 2.2, 3.2 in Richtung der Randlinie 1.5.1 oder im Randbereich 1.5.2.

Die Kugelschale 1 besteht aus federnd elastischem Material, insbesondere aus Kunststoff. Als Kunststoffe kommen vor allem solche aus oder auf der Basis von Polyethylen, Polypropylen, Polyoximethylen, Polyethersulfon, Polyetheretherketon oder Polyamid in Frage.

Die Innenwand 1.4 der Kugelschale 1 besitzt rillen- oder kanalförmige Vertiefungen 1.6. Diese können gemäß den Fig. 3 und 4 in Richtung der Zentralachse 4 oder gemäß Fig. 5 schräg im Winkel dazu, bogenförmig, spiralförmig oder dgl. verlaufen. An der Öffnung 1.1 austretende Vertiefungen sind dort offen, so daß sie später mit Fett gefüllt werden können. Sie können dort jedoch auch alle oder wenigstens einige hiervon geschlossen sein. Falls eine Vertiefung 1.6 einen Schlitz 2 bzw. 3 schneidet, ist der Schlitz 2 bzw. 3 an bzw. vor der Schnittstelle geschlossen. Durch die geschlossene Vertiefung 1.6 am Schlitz 2 bzw. 3 kann keine Einfüllmasse zur Bildung einer Zwischenschicht 10 in eine Vertiefung 1.6 eintreten. Unter Umständen kann es aber zweckmäßig sein, die Vertiefung 1.6 am Schlitz 2 oder/und 3 offen zu lassen. Es ergeben sich beim Aufschnappen auf eine Kugel 7 eines Kugelzapfens 8 Kanäle 9, die nach der Montage mit einem Schmiermittel, beispielsweise Fett mit darin dispergiertem Molybdändisulfid, gefüllt werden. Dieses Fett kann beispielsweise von der Öffnung 1.1 oder von einer anderen Einspritzöffnung her eingespritzt oder eingepreßt werden.

Auf der Außenwand 1.7 der Kugelschale 1 sind nach außen überstehende Abstandsnoppen 1.8 (Fig. 1) vorgesehen, die beim Einsetzen in einen Kugelhohlraum 6.1 des Kugelgelenkgehäuses 6 an der Innenwand 6.2 des Kugelhohlraums 6.1 leicht oder unter geringer Vorspannung anliegen oder sich in geringem Abstand von dieser befinden. Hierdurch ist die Lage der Kugelschale 1 und damit auch der Kugel 7 im Kugelhohlraum 6.1 vorgegeben und die Kugelschale 1 darin fixierbar.

Beim Ausführungsbeispiel gemäß den Fig. 1 bis 5 sind Abstandsnoppen 1.8.1 im oberen Bereich, also im Bereich der Öffnung 1.1, und im Bereich des Zentralbereichs 1.5 vorgesehen. Abstandsnoppen 1.8.2 können auch beidseitig der Schlitze 2, 3 vorgesehen sein, wie aus den Fig. 6 und 7 ersichtlich ist. Auch können die Abstandsnoppen 1.8 in der Ebene und/oder oberhalb und/oder unterhalb des Äquators 12 (Fig. 7) der Kugelschale 1 vorgesehen sein. Bevorzugt sind Abstandsnoppen 1.8 auch im Randbereich 1.5.2 des Zentralbereichs 1.5 vorhanden, insbesondere am Umfang symmetrisch verteilt, vgl. Fig. 6. Vorzugsweise sind sie dort am Ende 2.1 bzw. 3.1 der Schlitze 2 bzw. 3 angeordnet.

Die der Angußöffnung 6.3 zugewandten bzw. beim Einspritzen der Einfüllmasse in der Zuströmrichtung liegenden Flächen 13 sind strömungsgünstig, beispielsweise schräg, stumpf- bis spitzwinklig oder dgl. ausgebildet.

Der Zentralbereich 1.5 befindet sich an einer Stelle, an der bei eingesetzter Kugel 7 eine bei deren Herstellung sich bildende, von der Kugelform abweichende, in der Regel abgeflachte Polkappe 7.1 (Fig. 3A) vorhanden ist. Mit Vorteil befindet sich im Bereich des Zentralbereiches 1.5 im zugeordneten Kugelgelenkgehäuse 6 die Angußöffnung 6.3 zum Einspritzen einer Einfüllmasse oder Zwischenschicht, wie in Fig. 3 mit 10 angedeutet ist. Die Zwischenschicht 10 füllt den durch den Abstand der Kugelschale 1 von der Innenwand 6.2 des Kugelhohlraums 6.1 gebildeten Hohlraum 11 aus, verankert die Kugelschale 1 fest im Kugelgelenkgehäuse 6 und gleicht alle Toleranzen aus.

Bevorzugt befindet sich, wie in den Fig. 6 und 7 dargestellt, am Ende 2.1 bzw. 3.1 der Schlitze 2, 3, also an der Basis eines Schlitzes 2 bzw. 3, jeweils ein Abstandsnoppen 1.8.2. Dies wirkt einem unerwünschten Einreißen der Schlitze 2, 3 an den Enden 2.1 bzw. 3.1 bei der Herstellung der Kugelschale 1 oder bei deren Gebrauch entgegen. Vorteilhaft ist die Schlitzbasis insgesamt oder es sind zumindest deren randseitigen Enden 2.1.1 bzw. 3.1.1 gerundet.

Es kann vorteilhaft sein, wenn die Innenwand 6.2 des Kugelgelenkgehäuses 6 aufgerauht ist, insbesondere eingeformte Nuten, Rillen und/oder Riefen besitzt.

Das Kugelgelenkgehäuse 6 ist vorteilhaft zusammen mit einem Befestigungsflansch oder dgl. als ein einziges Bauteil ausgebildet. Die Lagerschale 1 besteht insbesondere aus einem nicht verstärkten Kunststoff. Die Einfüllmasse bzw. Zwischenschicht 10 kann aus Glas oder einem anderen mineralischen Material bestehen, das gegebenenfalls mit Fasern, Kugeln oder anderen Partikeln gefüllt sein kann.

## Patentansprüche

1. Kugelschale (1) für ein Kugelgelenk, das ein Kugelgelenkgehäuse (6) aufweist, wobei die Kugelschale (1) mit einer Öffnung (1.1) zum Aufschieben oder Aufschnappen auf eine Kugel (7) eines Kugelgelenkzapfens (8) versehen ist und wobei die Kugelschale (1) in einem Kugelhohlraum (6.1) des Kugelgelenkgehäuses (6) eingesetzbar ist, die Kugelschale (1) aus federnd elastischem Material besteht und die Innenwand (1.4) der Kugelschale (1) rillen- oder kanalförmige Vertiefungen (1.6) besitzt, **gekennzeichnet durch** folgende Merkmale:
- die Kugelschale (1) ist derart bemessen, dass beim Einsetzen zwischen Kugelschale (1) und der Innenwand (6.2) des Kugelhohlraums (6.1) ein Hohlraum (11) entsteht, der mit einer Füllmasse (10) ausfüllbar ist;
- die Kugelschale (1) ist mit mindestens einem Schlitz (2; 3) versehen, der bzw. die von der Öffnung (1.1) aus bis zu dem der Öffnung (1.1) gegenüberliegenden Zentralbereich (1.5) der Kugelschale (1), nämlich einem Bereich, in den die Polkappe (7.1) der einzusetzenden Kugel (7) zu liegen kommt, verläuft, so dass **durch** den bzw. die Schlitze (2; 3) gebildete Schalenteile (1.2; 1.3) nach außen federnd auslenkbar sind.

2. Kugelschale nach Anspruch 1, **dadurch gekennzeichnet, daß** wenigstens einige Vertiefungen (1.6) bis zur Öffnung (1.1) verlaufen und dort geschlossen sind.

3. Kugelschale nach Anspruch 1, **dadurch gekennzeichnet, daß** wenigstens einige Vertiefungen (1.6) bis zur Öffnung (1.1) verlaufen und dort offen sind.

4. Kugelschale nach Anspruch 1, **dadurch gekennzeichnet, daß** wenigstens einige Vertiefungen (1.6) bis zur Öffnung (1.1) verlaufen und dort einige der Vertiefungen (1.6) offen und einige andere der Vertiefungen (1.6) geschlossen sind.

5. Kugelschale nach einem der Ansprüche 1 bis 4, **dadurch gekennzeichnet, daß** für den Fall, daß nur ein oder zwei Schlitz(e) (2; 3) vorgesehen sind, am Ende (2.1 und/oder 3.1) wenigstens eines Schlitzes (2; 3) quer zu diesem bzw. zu diesen ein nach einer oder nach beiden Seiten abzweigender Querschlitz (2.2; 3.2) vorgesehen ist.

6. Kugelschale nach Anspruch 5, **dadurch gekennzeichnet, daß** der oder die Querschlitze (2.2; 3.2) in Richtung der Randlinie (1.5.1) oder im Randbereich (1.5.2) des Zentralbereiches (1.5) verläuft bzw. verlaufen.

7. Kugelschale nach einem der Ansprüche 1 bis 6, **dadurch gekennzeichnet, daß** die Außenwand (1.7) der Kugelschale (1) nach außen überstehende Abstandsnoppen (1.8; 1.8.1; 1.8.2) besitzt, durch welche die Lage der Kugelschale (1) in einem Kugelhohlraum (6.1) eines Kugelgelenkgehäuses (6) unter Bildung eines Hohlraumes (11) zwischen Kugelschale (1) und Innenwand (6.2) des Kugelhohlraums (6.1) zumindest im wesentlichen vorgegeben ist.

8. Kugelschale nach einem der Ansprüche 1 bis 7, **dadurch gekennzeichnet, daß** der Zentralbereich (1.5) im Bereich der bei einer Kugel (7) üblicherweise vorhandenen, von der Kugelform abweichenden, insbesondere abgeflachten, Polkappe (7.1) vorgesehen ist.

9. Kugelschale nach einem der Ansprüche 1 bis 8, **dadurch gekennzeichnet, daß** im Zentralbereich (1.5) am jeweiligen Ende (2.1; 3.1) eines Schlitzes (2; 3) je ein Abstandsnoppen (1.8 bzw. 1.8.2) vorgesehen ist.

10. Kugelschale nach einem der Ansprüche 1 bis 9, **dadurch gekennzeichnet, daß** der Zentralbereich (1.5) im Bereich einer in einem zugeordneten Kugelgelenkgehäuse (6) vorgesehenen Eingußöffnung (6.3) vorgesehen ist.

11. Kugelschale nach einem der Ansprüche 1 bis 10, **dadurch gekennzeichnet, daß** die Vertiefungen (1.6) in Richtung der Zentralachse(n) (4; 5) verlaufen.

12. Kugelschale nach einem der Ansprüche 1 bis 10, **dadurch gekennzeichnet, daß** die Vertiefungen (1.6) im Winkel zur Zentralachse (4 bzw. 5) verlaufen.

13. Kugelschale nach Anspruch 12, **dadurch gekennzeichnet, daß** die Vertiefungen (1.6) bogenförmig oder spiralförmig verlaufen.

14. Kugelschale nach Anspruch 12 oder 13, **dadurch gekennzeichnet, daß** Vertiefungen, die bis zu einem Schlitz (2; 3) verlaufen, dort geschlossen sind bzw. nicht ganz bis zum Schlitz (2; 3) verlaufen.

15. Kugelschale nach einem der Ansprüche 1 bis 14, **dadurch gekennzeichnet, daß** der Zentralbereich (1.5) vertieft ist.

16. Kugelschale nach einem der Ansprüche 1 bis 15, **dadurch gekennzeichnet, daß** Abstandsnoppen (1.8.1) im Bereich der Öffnung (1.1) vorgesehen sind.

17. Kugelschale nach einem der Ansprüche 1 bis 15, **dadurch gekennzeichnet, daß** Abstandsnoppen (1.8) beidseitig der Schlitze (2; 3) vorgesehen sind.

18. Kugelschale nach einem der Ansprüche 1 bis 15, **dadurch gekennzeichnet, daß** Abstandsnoppen (1.8.1) im Bereich des Äquators (12) der Kugelschale (1) vorgesehen sind (Fig. 7).

19. Kugelschale nach einem der Ansprüche 16 bis 18, **dadurch gekennzeichnet, daß** die Abstandsnoppen (1.8; 1.8.1; 1.8.2) am Umfang der Kugelschale (1) symmetrisch verteilt angeordnet sind.

20. Kugelschale nach einem der Ansprüche 16 bis 19, **dadurch gekennzeichnet, daß** Abstandsnoppen (1.8.1) oberhalb des Äquators (12) vorgesehen sind.

21. Kugelschale nach einem der Ansprüche 16 bis 20, **dadurch gekennzeichnet, daß** Abstandsnoppen (1.8.2) im Randbereich (1.5.2) des Zentralbereichs (1.5) vorgesehen sind.

22. Kugelschale nach einem der Ansprüche 1 bis 21, **dadurch gekennzeichnet, daß** das Ende (2.1; 3.1) der Schlitze (2; 3) bogenförmig ausgebildet, zumindest aber die Ecken gerundet sind.

23. Kugelgelenk mit einem Kugelgelenkgehäuse (6) und einer Kugelschale (1) gemäß einem der Ansprüche 1 bis 22,
**dadurch gekennzeichnet,**
**dass** die Zentralachse (4) der Kugelschale (1) zur Zentralachse (5) des Kugelgelenkgehäuses (6) zumindest annähernd koaxial verläuft,
**dass** beim Einsetzen der Kugelschale (1) in den Kugelhohlraum (6.1) des Kugelgelenkgehäuses (6) ein Hohlraum (11) gebildet ist, und
**dass** im Kugelgelenkgehäuse (6) gegenüber dem Zentralbereich (1.5) der Kugelschale (1) eine Eingussöffnung (6.3) vorgesehen ist, über die der Hohlraum (11) zwischen Kugelschale (1) und Innenwand (6.2) des Kugelgelenkgehäuses (6) mit einer Einfüllmasse (10) ausgefüllt ist.

24. Kugelgelenk nach Anspruch 23, **dadurch gekennzeichnet, daß** an der Kugelschale (1) vorhandene Abstandsnoppen (1.8) an der Innenwand (6.2) leicht oder unter geringer Vorspannung anliegen.

25. Kugelgelenk nach Anspruch 23 oder 24, **dadurch gekennzeichnet, daß** die dem Zentralbereich (1.5) oder der Eingußöffnung (6.3) zugewandte Fläche 13 der Abstandsnoppen (1.8; 1.8.1; 1.8.2) strömungsgünstig, insbesondere schräg, stumpfoder spitzwinklig, ausgebildet ist.

26. Kugelgelenk nach einem der Ansprüche 23 bis 25, **dadurch gekennzeichnet, daß** die Innenwand (6.2) des Kugelgelenkgehäuses (6) rauh oder/und mit Rillen, Nuten oder Riefen, versehen ist.

27. Kugelgelenk nach einem der Ansprüche 23 bis 26, **dadurch gekennzeichnet, daß** das Kugelgelenkgehäuse (6) zusammen mit einem Befestigungsteil ein einheitliches Bauteil bildet.

## Claims

1. Ball socket (1) for a ball joint which exhibits a ball joint housing (6), in which the ball socket (1) is provided with an opening (1.1) so that it can be slid or snapped on to a ball (7) of a ball joint pin (8) and in which the ball socket (1) can be inserted in a ball cavity (6.1) in the ball joint housing (6), in which the ball socket (1) is made of a springy elastic material and the internal wall (1.4) of the ball socket (1) has groove-like or channel-like recesses (1.6), **characterised by** the following features:
- the ball socket (1) is of such a size that when inserted a cavity (11) is formed between the ball socket (1) and the internal wall (6.2) of the ball cavity (6.1), which cavity (11) can be filled with a filling material (10),
- the ball socket (1) is provided with at least one slot (2; 3) which runs out from the opening (1.1) to the central area (1.5) of the ball socket (1) facing the opening (1.1), namely an area in which the pole cap (7.1) of the ball (7) to be inserted comes to rest, so that socket parts (1.2; 1.3) formed by the slot or slots (2; 3) can be deflected resiliently outwards.

2. Ball socket according to claim 1, **characterised in that** at least some recesses (1.6) run as far as the opening (1.1) and are closed there.

3. Ball socket according to claim 1, **characterised in that** at least some recesses (1.6) run as far as the opening (1.1) and are open there.

4. Ball socket according to claim 1, **characterised in that** at least some recesses (1.6) run as far as the opening (1.1) and there some of the recesses (1.6) are open and some others of the recesses (1.6) are closed.

5. Ball socket according to one of claims 1 to 4, **characterised in that** in the event that only one or two slots (2; 3) are provided, a transverse slot (2.2; 3.2) branching on one or on both sides is provided at the end (2.1 and/or 3.1) of at least one slot (2; 3) transversely to the latter.

6. Ball socket according to claim 5, **characterised in that** the transverse slot or slots (2.2; 3.2) run in the direction of the edge line (1.5.1) or in the edge area (1.5.2) of the central area (1.5).

7. Ball socket according to one of claims 1 to 6, **characterised in that** the external wall (1.7) of the ball socket (1) has spacing projections (1.8; 1.8.1; 1.8.2) which project outwards and at least substantially predetermine the position of the ball socket (1) in a ball cavity (6.1) of a ball joint housing (6) forming a cavity (11) between the ball socket (1) and the internal wall (6.2) of the ball cavity (6.1).

8. Ball socket according to one of claims 1 to 7, **characterised in that** the central area (1.5) is provided in the area of the pole cap (7.1) which is usually present with a ball (7) and deviates from the ball shape, in particular is flattened.

9. Ball socket according to one of claims 1 to 8, **characterised in that** a spacing projection (1.8 and 1.8.2) is provided in the central area (1.5) at the respective end (2.1; 3.1) of a slot (2; 3).

10. Ball socket according to one of claims 1 to 9, **characterised in that** the central area (1.5) is provided in the area of a casting opening (6.3) provided in an associated ball joint housing (6).

11. Ball socket according to one of claims 1 to 10, **characterised in that** the recesses (1.6) run in the direction of the central axis or axes (4; 5).

12. Ball socket according to one of claims 1 to 10, **characterised in that** the recesses (1.6) run at an angle to the central axis (4 or 5).

13. Ball socket according to claim 12, **characterised in that** the recesses (1.6) run in a curve or helix.

14. Ball socket according to claim 12 or 13, **characterised in that** recesses which run as far as a slot (2; 3) are closed there or do not run quite as far as the slot (2; 3).

15. Ball socket according to one of claims 1 to 14, **characterised in that** the central area (1.5) is recessed.

16. Ball socket according to one of claims 1 to 15, **characterised in that** spacing projections (1.8.1) are provided in the area of the opening (1.1).

17. Ball socket according to one of claims 1 to 15, **characterised in that** spacing projections (1.8) are provided on both sides of the slots (2; 3).

18. Ball socket according to one of claims 1 to 15, **characterised in that** spacing projections (1.8.1) are provided in the area of the equator (12) of the ball socket (1) (fig. 7).

19. Ball socket according to one of claims 16 to 18, **characterised in that** the spacing projections (1.8; 1.8.1; 1.8.2) are arranged distributed symmetrically on the circumference of the ball socket (1).

20. Ball socket according to one of claims 16 to 19, **characterised in that** spacing projections (1.8.1) are provided above the equator (12).

21. Ball socket according to one of claims 16 to 20, **characterised in that** spacing projections (1.8.2) are provided in the edge area (1.5.2) of the central area (1.5).

22. Ball socket according to one of claims 1 to 21, **characterised in that** the end (2.1; 3.1) of the slots (2;3) is curved, but at least the corners are rounded.

23. Ball joint with a ball joint housing (6) and a ball socket (1) according to one of claims 1 to 22, **characterised in that** the central axis (4) of the ball socket (1) runs at least roughly coaxially with the central axis (5) of the ball joint housing (6),
**in that** when the ball socket (1) is inserted in the ball cavity (6.1) of the ball joint housing (6) a cavity (11) is formed, and
**in that** a casting opening (6.3) is provided in the ball joint housing (6) facing the central area (1.5) of the ball socket (1), through which the cavity (11) between the ball socket (1) and the internal wall (6.2) of the ball joint housing (6) is filled with a filling material (10).

24. Ball joint according to claim 23, **characterised in that** spacing projections (1.8) present on the ball socket (1) bear gently or with slight preload on the internal wall (6.2).

25. Ball joint according to claim 23 or 24, **characterised in that** the face (13) of the spacing projections (1.8; 1.8.1; 1.8.2) facing the central area (1.5) or the casting opening (6.3) is of a form favourable for flow, in particular oblique, obtuse-angled or acute-angled.

26. Ball joint according to one of claims 23 to 25, **characterised in that** the internal wall (6.2) of the ball joint housing (6) is rough or/and provided with grooves, slots or scoring.

27. Ball joint according to one of claims 23 to 26, **characterised in that** the ball joint housing (6) forms an integrated component with a fastening part.

## Revendications

1. Cuvette à rotule (1) pour un joint à rotule comportant un boîtier de joint (6), la cuvette (1) ayant une ouverture (1.1) pour s'engager ou s'enclipser sur une rotule (7) portée par un pied de rotule (8), la cuvette (1) se plaçant dans une cavité (6.1) du boîtier à cuvette (6), la cuvette (1) étant en une matière élastique à ressort et la paroi intérieure (1.4) de la cuvette (1) comportant des évidements (1.6) en forme de rainures ou de canaux,
**caractérisée en ce que**
- la cuvette (1) est dimensionnée pour qu'à sa mise en place un espace (11) subsiste entre la cuvette (1) et la paroi intérieure (6.2) de la cavité (6.1), intervalle qui se remplit d'une masse de remplissage (10),
- la cuvette (1) est munie d'au moins une fente (2, 3) allant de l'ouverture (1.1) jusqu'à la zone centrale (1.5) de la cuvette (1) à l'opposé de l'ouverture (1.1), à savoir une zone dans laquelle le sommet (7.1) de la rotule (7) à mettre en place arrive en appui, de façon que les parties de cuvette (1.2 ; 1.3) formées par la ou les fentes (2 ; 3) s'écartent élastiquement vers l'extérieur.

2. Cuvette à rotule selon la revendication 1,
**caractérisée en ce qu'**
au moins certains évidements (1.6) arrivent jusqu'à l'ouverture (1.1) et y sont fermés.

3. Cuvette à rotule selon la revendication 1,
**caractérisée en ce qu'**
au moins certains évidements (1.6) arrivent jusqu'à l'ouverture (1.1) et y débouchent.

4. Cuvette à rotule selon la revendication 1,
**caractérisée en ce qu'**
au moins certains évidements (1.6) arrivent jusqu'à l'ouverture (1.1) et à cet endroit certains des évidements (1.6) débouchent et d'autres évidements (1.6) sont fermés.

5. Cuvette à rotule selon l'une des revendications 1 à 4,
**caractérisée en ce que**
dans le cas d'une ou de deux fentes seulement (2, 3), à l'extrémité (2.1 et/ou 3.1) d'au moins une fente (2, 3), transversalement à celle(s)-ci, il est prévu une fente transversale (2.2 ; 3.2) dérivant vers les côtés et ouverte d'un côté ou des deux côtés.

6. Cuvette à rotule selon la revendication 5,
**caractérisée en ce que**
les fentes transversales (2.2 ; 3.2) sont dirigées en direction de la ligne du bord (1.5.1) ou dans la zone du bord (1.5.2) de la zone centrale (1.5).

7. Cuvette à rotule selon l'une des revendications 1 à 6,
**caractérisée en ce que**
la paroi extérieure (1.7) de la cuvette (1) possède des bossages d'écartement (1.8 ; 1.8.1 ; 1.8.2) dépassant vers l'extérieur, qui prédéfinissent au moins principalement la position de la cuvette (1) dans une cavité (6.1) d'un boîtier de joint à rotule (6) en formant un espace (11) entre la cuvette (1) et la paroi intérieure (6.2) de la cavité (6.1).

8. Cuvette à rotule selon l'une des revendications 1 à 7,
**caractérisée en ce que**
la zone centrale (1.5) dans la zone qui existe habituellement sur une rotule (7), présente un sommet (7.1) différent de la forme sphérique, notamment une forme aplatie.

9. Cuvette à rotule selon l'une des revendications 1 à 8,
**caractérisée en ce que**
dans la zone centrale (1.5) à chaque extrémité (2.1 ; 3.1) d'une fente (2, 3) il est prévu chaque fois un bossage d'écartement (1.8, 1.8.2).

10. Cuvette à rotule selon l'une des revendications 1 à 9,
**caractérisée en ce que**
la zone centrale (1.5) comporte un orifice de coulée (6.3) dans le boîtier (6) du joint à rotule.

11. Cuvette à rotule selon l'une des revendications 1 à 10,
**caractérisée en ce que**
les évidements (1.6) sont dirigés suivant l'axe central (4, 5).

12. Cuvette à rotule selon l'une des revendications 1 à 10,
**caractérisée en ce que**
les évidements (1.6) font un angle par rapport à l'axe central (4, 5).

13. Cuvette à rotule selon la revendication 12,
**caractérisée en ce que**
les évidements (1.6) ont un tracé courbe ou en spirale.

14. Cuvette à rotule selon l'une des revendications 12 ou 13,
**caractérisée en ce que**
les évidements qui vont jusqu'à une fente (2, 3) y sont fermés ou n'arrivent pas complètement jusqu'à la fente (2, 3).

15. Cuvette à rotule selon l'une des revendications 1 à 14,
**caractérisée en ce que**
la zone centrale (1.5) est en creux.

16. Cuvette à rotule selon l'une des revendications 1 à 15,
**caractérisée en ce que**
les bossages d'écartement (1.8.1) sont prévus dans la zone de l'ouverture (1.1).

17. Cuvette à rotule selon l'une des revendications 1 à 15,
**caractérisée en ce que**
les bossages d'écartement (1.8) sont prévus des deux côtés des fentes (2, 3).

18. Cuvette à rotule selon l'une des revendications 1 à 15,
**caractérisée en ce que**
les bossages d'écartement (1.8.1) sont prévus dans la zone de l'équateur (12) de la cuvette (1) (figure 7).

19. Cuvette à rotule selon l'une des revendications 16 à 18,
**caractérisée en ce que**
les bossages d'écartement (1.8 ; 1.8.1 ; 1.8.2) sont répartis de manière symétrique à la périphérie de la cuvette (1).

20. Cuvette à rotule selon l'une des revendications 16 à 19,
**caractérisée en ce que**
les bossages d'écartement (1.8.1) sont prévus au-dessus de l'équateur (12).

21. Cuvette à rotule selon l'une des revendications 16 à 20,
**caractérisée en ce que**
les bossages d'écartement (1.8.2) sont prévus dans la zone du bord (1.5.2) de la zone centrale (1.5).

22. Cuvette à rotule selon l'une des revendications 1 à 21,
**caractérisée en ce que**
l'extrémité (2.1 ; 3.1) des fentes (2, 3) est de forme courbe et au moins les coins sont arrondis.

23. Joint à rotule comportant un boîtier (6) et une cuvette (1) selon l'une des revendications 1 à 22,
**caractérisé en ce que**
l'axe central (4) de la cuvette (1) est au moins sensiblement coaxial à l'axe central (5) du boîtier (6) du joint à rotule,
lorsqu'on place la cuvette (1) dans la cavité (6.1) du boîtier (6) du joint à rotule, on forme un espace (11) et
le boîtier (6) du joint comporte par rapport à la zone centrale (1.5) de la cuvette (1), un orifice de coulée (6.3) par lequel l'espace (11), entre la cuvette (1) et la paroi intérieure (6.2) du boîtier (6) du joint à rotule, se remplit d'une masse coulée (10).

24. Joint à rotule selon la revendication 23,
**caractérisé en ce que**
les bossages d'écartement (1.8), prévus sur la cuvette (1), s'appliquent avec une légère ou faible précontrainte contre la paroi intérieure (6.2).

25. Joint à rotule selon la revendication 23 ou 24,
**caractérisé en ce que**
la surface (13) des bossages d'écartement (1.8 ; 1.8.1 ; 1.8.2) tournée vers la zone centrale (1.5) ou l'orifice de coulée (6.3) sont réalisés de façon aéraulique, notamment en biais, avec un angle obtus ou un angle aigu.

26. Joint à rotule selon l'une des revendications 23 à 25,
**caractérisé en ce que**
la paroi intérieure (6.2) du boîtier (6) du joint est rugueuse ou/et comporte des rainures, des nervures ou des striures.

27. Joint à rotule selon l'une des revendications 23 à 26,
**caractérisé en ce que**
le boîtier (6) du joint à rotule forme une pièce unique avec une partie de fixation).
